# EUROPEAN PATENT APPLICATION

(11) **EP 3 992 856 A1**
(43) Date of publication of application: **04.05.2022**
(21) Application number: 20204562.1
(22) Date of filing: 29.10.2020
(51) Int. Cl.: G06N 3/04, G06N 3/08, G06N 3/00

(54) **METHOD AND SYSTEM FOR OPERATING A DEVICE BY USING HIERARCHICAL REINFORCEMENT LEARNING**

(71) Applicant: Siemens Aktiengesellschaft, 80333 München (DE)
(72) Inventor: Ringsquandl, Martin, 83022 Rosenheim (DE)

(57) **Abstract**

The invention relates to a method for operating a device by using hierarchical reinforcement learning, whereby a complete operation task is to perform by said device, said method having the following steps:
a) Decomposing the complete operation task into a set of subtasks,
b) Representing dependencies among all subtasks of the complete task by a subtask graph (ggm) being direct acyclic and having nodes connected by edges, said nodes representing said subtasks and said edges representing relations among these subtasks,
c) using the subtask graph as input for a graph convolutional neural network in which from the input data by use of a convolutional operator for each network node a representation is obtained containing information about the relation of one network node and at least some neighbored network nodes and delivering encoded data in order to create a subtask graph vector (gv) in which a relation between nodes that are directly connected by an edge is encoded,
d) using the subtask vector (gv) obtained in step c) as input data for a deep neural network by which further encoded data are obtained;
e) Using said further encoded data to set up an action of the device (a) in order to perform at least one subtasks of the set of subtasks.

## Description

The invention relates to method and system for operating a device by using hierarchical reinforcement learning, whereby a complete operation task is to perform by said device.

Such device can be e.g. robot, autonomous guided device/vehicle.

Multi-task reinforcement learning is becoming increasingly important, where an agent of the device or the device itself needs to be able to adapt to different tasks in the deployed environment.

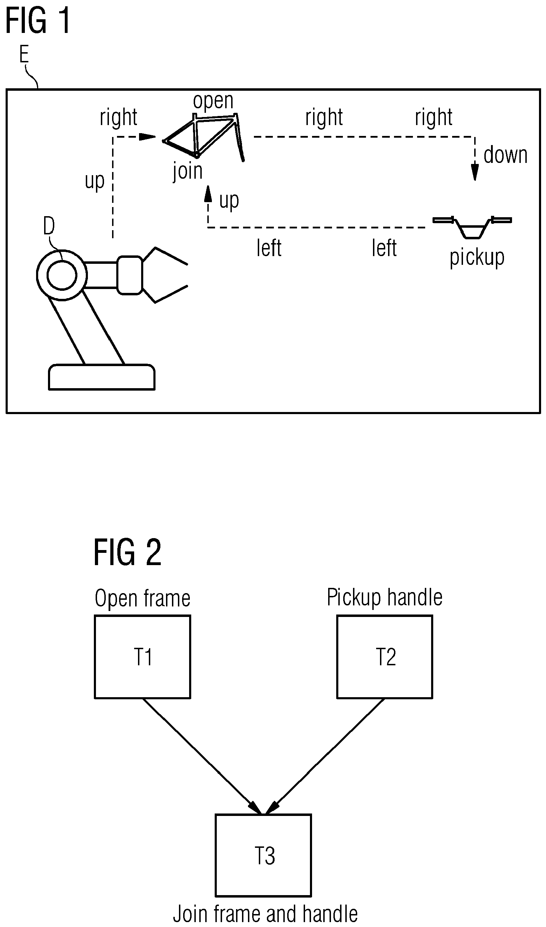

As an example, consider the learning task of assembling two components of a bike. Assembling can be done by a gripper robot D as shown in figure 1 which can move directly in two dimensions an perform pickup, open and joint actions. The robot gets reward when the bike handle is successfully joint on the bike frame, i.e. the task is completed.

The robot has to navigate to the different objects in its environment E before it can couple them together.

Every task can be divided into subtasks. This concept of decomposition of the complete operation task falls in the realm of so-called hierarchical approaches to reinforcement learning (HLR) by using a modular neural network. Specifically, FeUdal Networks (FuNs) divide computing between at least two networks, in particular between at least two neural networks, where in a first network of said networks can be implemented in a so called manager agent and a second network of said networks can be implemented in a worker agent.

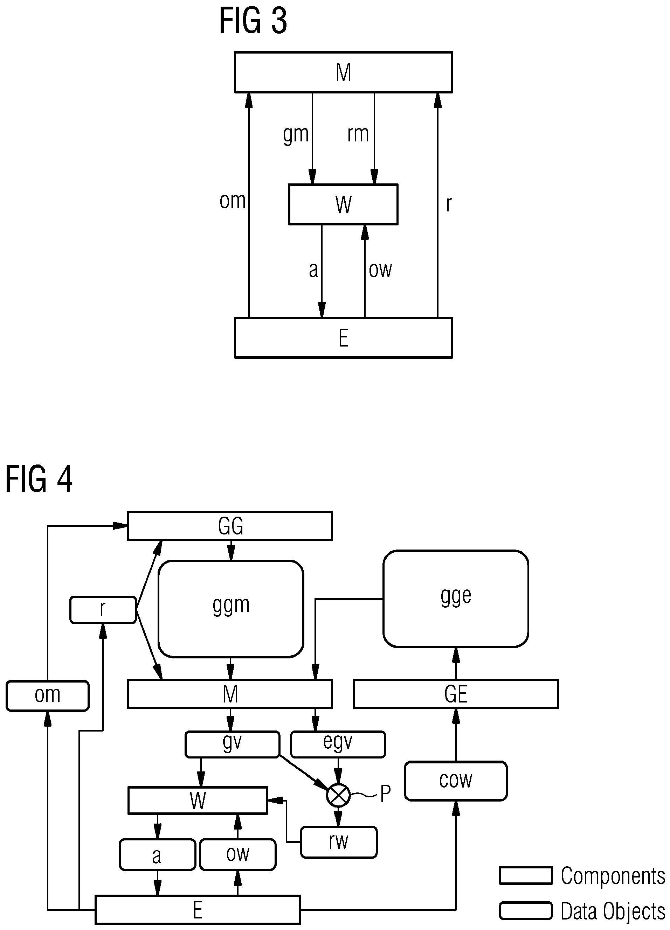

As shown in figure 3, where a Manager agent M learns a policy that generates sub-tasks for the worker agent W to be executed. The Manager agent and the worker agent itself observes (marked by om and ow) the environment E of the worker agent which takes an action a in order to perform the sub-task respectively sub-goal gm predetermined by the manager agent.

We can see that the variable om is just another representation of the observation ow. In other words, om carries the same information as ow, just in terms of different variables! That same information is passed to both worker and manager agent, but both handle the information somewhat differently.

The manager agent operates in a much higher dimensional vector space than the worker agent to encode how the manager agent is considering a much larger picture instead of solely local information.

Then, the manager agent consequently outputs a sub-goal gm for the worker agent to achieve.

The manager agent would offer a reward r, rm to the worker agent if the worker agent successfully executed the (sub-)task.

However, when using deep neural networks (DNN) for the Manager agent in HRL, e.g. as described in [1], a major problem is that the learned sub-goals are not interpretable for humans, since they are given as vectors in the latent space of the DNNs learned state approximations. Therefore, it is very difficult to interpret the policy of the Manager. There is a need for such interpretable data from a human domain expert perspective.

It is an object of the invention to provide an improvement to the afore-mentioned state of the art.

An aspect of the invention is a method for operating a device by using hierarchical reinforcement learning, whereby a complete operation task is to perform by said device, said method having the following steps:
a) Decomposing the complete operation task into a set of subtasks,
b) Representing dependencies among all subtasks of the complete task by a subtask graph being direct acyclic and having nodes connected by edges, said nodes representing said subtasks and said edges representing relations among these subtasks,
c) using the subtask graph as input for a graph convolutional neural network (GCN) in which from the input data by use of a convolutional operator for each network node a representation is obtained containing information about the relation of one network node and at least some neighbored network nodes and delivering encoded data in order to create a subtask graph vector in which a relation between nodes that are directly connected by an edge is encoded,
d) using the subtask vector obtained in step c) as input data for a deep neural network (DNN) by which further encoded data are obtained;
e) Using said further encoded data to set up an action of the device in order to perform at least one subtasks of the set of subtasks.

The graph convolutional neural network is preferably part of a manager agent e.g. as afore mentioned. The deep neural network is preferably part of a worker agent e.g. as afore described.

The method in this invention employs a feudal network architecture in combination with graph neural networks to produce sub-task graph that acts as an abstraction of the state space to the Worker agent and simultaneously offers an intuitive understanding for a human about the Manager policy.

Said subtask graph is created or adapted by at least one interaction with a user using a user interface.

According to an embodiment of the invention said subtask graph can be generated by a graph variational Autoencoder or by a Generative Adversarial Network.

According to an embodiment of the invention input data for the subtask graph generation are preferably derived from observing the state of an environment of the device which has performed the at least one subtask of the set of subtasks. Said state observation can lead to a further action which gives a reward feeding each machine learning model of the Generative Adversarial Network and of the graph convolutional neural network.

Dependencies among subtasks of a subset of the set of subtasks are preferably represented by a further subtask graph being direct acyclic and having nodes connected by edges, said nodes representing said subtasks of the subset and said edges representing relations among these subtasks. The further subtask graph can be used as input for the graph convolutional neural network in order to create a subtask partial graph vector in which a relation between nodes that are directly connected by an edge is encoded.

According to an embodiment of the invention the subtask graph vector and the subtask partial graph vector are compared by a vector distance metric which can be a product operator (e.g. the cross product or dot product). The distance result can be used as reward for improving said deep neural network (DNN). Said subtask partial graph is preferably extracted from observing the state of the environment of the device which has performed a subtask of the subset.

The following advantages and explanations are not necessarily the result of the object of the independent claims. Rather, they may be advantages and explanations that only apply to certain embodiments or variants.

The invention provides the following benefits:
- Human-interpretable policy of the Manager agent which describes a hierarchical decomposition of the complete operation task into sub tasks whose dependencies are represented by subtask graph.
- Allows human interaction by changing the sub-task graph on demand during execution; human domain knowledge can be easily introduced.
- Still keeping the efficiency advantages of HRL by converting a sparse reward signal to a more dense one for the Worker agent, allowing to complete much more complex and long-term tasks

A further aspect of the invention is a first apparatus for operating a device by using hierarchical reinforcement learning, comprising:
- an interface configured to decompose the complete task into a set of subtasks and provide a representation of dependencies among all subtasks of the complete operation task by a subtask graph being direct acyclic and having nodes connected by edges, said nodes representing said subtasks and said edges representing relations among these subtasks,
- a memory containing the subtask graph,
- a processor, programmed for executing a graph convolutional neural network in which from the subtask graph as input data by use of a convolutional operator for each network node a representation is obtained containing information about the relation of one network node and at least some neighbored network nodes and delivering encoded data in order to create a subtask graph vector in which a relation between nodes that are directly connected by an edge is encoded.

This apparatus can be represented by the afore mentioned manager agent which can be implemented by hardware, firmware and/or software or a combination of them.

A further aspect of the invention is a second apparatus for operating a device by using hierarchical reinforcement learning, comprising:
- an interface configured to obtain a subtask vector created by a graph convolutional neural network, in particular said graph convolutional neural network in the preceding claim,
- a memory contained said subtask vector,
- a processor, programmed for executing a deep neural network which generates further encoded data from the subtask vector,
- whereby said further encoded data set up an action in order to perform at least one subtasks of the set of subtasks.

The interface can be a graph generator like a graph variational Autoencoder or by a Generative adversarial Network.

This apparatus can be represented by the afore mentioned worker agent which can be implemented by hardware, firmware and/or software or a combination of them.

A further aspect of the invention is a system comprising at least one device, in particular a device of a manufacturing system, wherein said system contains said first apparatus and said second apparatus according, both apparatus communicates and/or are connected to each other in order to operate the device by using hierarchical reinforcement learning. The device can be a robot, an autonomous guided vehicle or any other (IoT-)device.

Embodiments as described above for the method can be analogous applied for the first, second apparatus as well as for said system.

The computer-readable storage media stores instructions executable by one or more processors of a computer, wherein execution of the instructions causes the computer system to perform the method.

The computer program (product) is executed by one or more processors of a computer and performs the method.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. Included in the drawings are the following figures:
- Figure 1 and 3: as described at the beginning.
- Figure 2: shows an example for a subtask graph derived from the example described in figure 1,
- Figure 4: depicts a Feudal Network architecture according to the invention, and
- Figure 5: shows a flowchart showing the method steps according to the invention.

As shown in figure 2 it is desirable to decompose the complete task into smaller sub-tasks e.g. T1, T2, T3 in order to learn the complete task more efficiently. A directed acyclic graph (DAG) shows the temporal dependency of the sub-task T1 "open frame", subtask T2 "pickup handle" and subtask T3 "join frame and handle".

This is helpful for complex tasks with sparse rewards. If the complex task can be broken down hierarchically into simpler sub-tasks, the worker agent - in this context the robot - can be rewarded when completing one of the sub-tasks instead of having to figure out how to do the complete task.

Starting from the standard feudal network architecture, shown in Figure 3, the architecture is extended as shown in figure 4 by the following components:
1) a Sub-task Graph Generator GG as a part of the Manager agent M creates a graph representation ggm of the subtasks. This can be implemented by using e.g. Graph Variational Autoencoders or Graph Generative Adversarial Network (GAN). The graph generation extension not only allows to encode a graph-based distance between a goal sub-task graph and the actual achieved one from the worker, but also allows human users to interpret the generated sub-task graph and verify its validity. The user can also change the subtask graph using a not depicted user interface.
2) a Graph Convolutional Network (GCN) in the Manager agent, which encodes the sub-task graph ggm into a latent vector gv (the sub-goal condition shown to the Worker),
3) a Partial Graph Extractor GE which takes the executed trajectory of the Worker agent which observes the environment and decomposes the sequence of this execution (marked by cow) into a partial executed sub-task graph gge. This can be implemented using process mining or sequence segmentation techniques.

By comparing the proposed sub-task graph from the Manager agent with the one that was actually executed by the Worker agent, the distance between these two graphs acts as a reward rw for the Worker agent. The distance P between the subtask graph vector gv and the partial executed graph vector egv can be build by a cross or dot product.

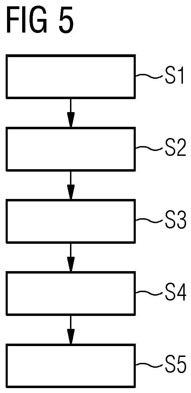

It is possible that the Manager agent's and the Worker agent's functions are implemented together in an apparatus respectively device. The apparatus/device can be a robot as for instance afore described in figure 1 or an autonomous guided vehicle. Alternatively, it is possible that the Manager agent's and the Worker agent's functions are separately implemented. The Manager agent's functions in a not depicted server being remotely connected with the apparatus or device where the Worker agent's functions are implemented. The apparatus respectively the device and/or the server in general having at least one processor which is configured to execute entirely or partly the method steps which are described in the following with the accompanying figure 5.

### Training procedure:

Component 1) needs to output an assignment of the most representative action as sub-task entities in the graph and then link them according to their execution order as a DAG.
Component 2) learns a latent vector encoding of subtask graphs.
   Components 1) and 2) can be trained on-policy with algorithms like policy gradient or alike by maximizing the actual environment reward r.
Component 3) can be trained off-policy by randomly sampling sequences from the environment E and finding the corresponding DAGs in an unsupervised manner, e.g. by sequence segmentation or process mining.

The Worker agent's network can be any neural network, preferably a DNN, optimizing for the Worker agent's reward ow. Any other neural network is possible e.g. DQN (deep grid net), A2C (Actor Critic algorithm), etc.

Furthermore, since the worker agent is trained to follow a policy conditioned on any given sub-task graph, a human can also manipulate this graph during operation, thus introducing domain knowledge on-demand. This can be helpful for inference in new environments, where the manager agent is not able to produce the optimal sub-task graph because of a lack of previously observed states during training.

In figure 5 the method steps S1 bis S5 are shown in a flow chart.

Step S1 and S2 includes method steps as described afore under Component 1):
S1: Decomposing the complete task into a set of subtasks,
S2: Representing dependencies among all subtasks of the complete task by a subtask graph ggm being direct acyclic and having nodes connected by edges, said nodes representing said subtasks and said edges representing relations among these subtasks.

Step S3 includes method steps as described afore under Component 2): using the subtask graph as input for a graph convolutional neural network (GCN) in which from the input data by use of a convolutional operator for each network node a representation is obtained containing information about the relation of one network node and at least some neighbored network nodes and delivering encoded data in order to create a subtask graph vector in which a relation between nodes representing said subtasks that are directly connected by an edge is encoded.

Step S4 includes the worker agent's deep neural network (DNN), which uses the obtained subtask vector from the manager agent's convolutional neural network (GCN) (see step S3) for generating further encoded data.

In Step 5 the further encoded data are used to perform an action e.g. as described in figure 1 to fulfill at least one subtask of the set of subtasks. Such a set of subtasks is depicted e.g. in figure 2 shows a graph of these subtasks. said subtask graph is generated by a graph variational Autoencoder or by a Generative Adversarial Network.

In at least one further step (not shown in the figures) a further subtask graph gge is used as input for the graph convolutional neural network (GCN) in order to create a subtask partial graph vector in which a relation between nodes that are directly connected by an edge is encoded, said graph convolutional neural network (GCN). Said both subtask graph vectors can be compared to each other by using a vector distance P metric (e.g. cross or dot product). The result of the distance metric leads to a reward for the worker agent for improving its deep neural network.

The method can be executed by a processor such as a microcontroller or a microprocessor, by an Application Specific Integrated Circuit (ASIC), by any kind of computer, including mobile computing devices such as tablet computers, smartphones or laptops, or by one or more servers in a control room or cloud.

For example, a processor, controller, or integrated circuit of the computer system and/or another processor may be configured to implement the acts described herein.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. A processor performs or executes the instructions to train and/or apply a trained model for controlling a system. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the spirit and scope of the invention covered by the claims. The phrase "at least one of A, B and C" as an alternative expression may provide that one or more of A, B and C may be used.

The terminology used herein is for the purpose of describing particular embodiments only and is not intended to be limiting of example embodiments of the invention. As used herein, the singular forms "a", "an", and "the" are intended to include the plural form as well, unless the context clearly indicates otherwise.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims may, alternatively, be made to depend in the alternative from any preceding or following claim, whether independent or dependent, and that such new combinations are to be understood as forming a part of the present specification.

None of the elements recited in the claims are intended to be a means-plus-function element unless an element is expressly recited using the phrase "means for" or, in the case of a method claim, using the phrases "operation for" or "step for".

While the present invention has been described above by reference to various embodiments, it should be understood that many changes and modifications may be made to the described embodiments. It is therefore intended that the foregoing description be regarded as illustrative rather than limiting, and that it be understood that all equivalents and/or combinations of embodiments are intended to be included in this description.

### References

[1] HIERARCHICAL AND INTERPRETABLE SKILL ACQUISITION IN MULTI-TASK REINFORCEMENT LEARNING (Shu 2018): https://arxiv.org/pdf/1712.07294.pdf

## Claims

1. Method for operating a device by using hierarchical reinforcement learning, whereby a complete operation task is to perform by said device, said method having the following steps:
a) Decomposing the complete operation task into a set of subtasks,
b) Representing dependencies among all subtasks of the complete task by a subtask graph (ggm) being direct acyclic and having nodes connected by edges, said nodes representing said subtasks and said edges representing relations among these subtasks,
c) using the subtask graph as input for a graph convolutional neural network in which from the input data by use of a convolutional operator for each network node a representation is obtained containing information about the relation of one network node and at least some neighbored network nodes and delivering encoded data in order to create a subtask graph vector (gv) in which a relation between nodes that are directly connected by an edge is encoded,
d) using the subtask vector (gv) obtained in step c) as input data for a deep neural network by which further encoded data are obtained;
e) Using said further encoded data to set up an action of the device (a) in order to perform at least one subtasks of the set of subtasks.

2. Method according to the preceding claim, wherein said subtask graph (ggm) is generated by a graph variational Autoencoder or by a Generative Adversarial Network.

3. Method according to claim 1 or 2, wherein said subtask graph is created or adapted by at least one interaction with a user using a user interface.

4. Method according to claim 2, wherein input data for the subtask graph generation are derived from observing the state (om) of an environment of the device which has performed the at least one subtask of the set of subtasks.

5. Method according to the preceding claim, wherein said state observation leads to a further action which gives a reward (r) feeding each machine learning model of the Generative Adversarial Network and of the graph convolutional neural network.

6. Method according to one of the preceding claims, wherein dependencies among subtasks of a subset of the set of subtasks are represented by a further subtask graph (gge) being direct acyclic and having nodes connected by edges, said nodes representing said subtasks of the subset and said edges representing relations among these subtasks.

7. Method according to the preceding claim, wherein using the further subtask graph (gge) as input for the graph convolutional neural network in order to create a subtask partial graph vector (egv) in which a relation between nodes that are directly connected by an edge is encoded.

8. Method according to the preceding claim, wherein the subtask graph vector (gv) and the subtask partial graph vector (egv) are compared by a vector distance metric (P).

9. Method according to the preceding claim, wherein the distance result is used as reward (rw) for improving said deep neural network.

10. Method according to one of the preceding claims 6 to 9, wherein said subtask partial graph (gge) is extracted from observing the state of the environment of the device which has performed a subtask of the subset.

11. An apparatus (M) for operating a device by using hierarchical reinforcement learning, comprising:
- an interface (GG) configured to decompose the complete task into a set of subtasks and provide a representation of dependencies among all subtasks of the complete operation task by a subtask graph (ggm) being direct acyclic and having nodes connected by edges, said nodes representing said subtasks and said edges representing relations among these subtasks,
- a memory containing the subtask graph (ggm),
- a processor, programmed for executing a graph convolutional neural network in which from the subtask graph (ggm) as input data by use of a convolutional operator for each network node a representation is obtained containing information about the relation of one network node and at least some neighbored network nodes and delivering encoded data in order to create a subtask graph vector (gv) in which a relation between nodes that are directly connected by an edge is encoded.

12. An apparatus (W) for operating a device by using hierarchical reinforcement learning, comprising:
- an interface configured to obtain a subtask vector (gv) created by a graph convolutional neural network, in particular said graph convolutional neural network in the preceding claim,
- a memory contained said subtask vector (gv),
- a processor, programmed for executing a deep neural network which generates further encoded data from the subtask vector,
- whereby said further encoded data set up an action (a) in order to perform at least one subtasks of the set of subtasks.

13. A system comprising at least one device, in particular of a manufacturing system, wherein said system contains a first apparatus (M) according to claim 11 and a second apparatus (W) according to claim 12, both apparatus communicates and/or are connected to each other in order to operate the device by using hierarchical reinforcement learning.

14. Computer program product which is being executed by one or more processors of a computer in order to perform a method according to any of the claims 1 to 10.

15. Computer readable storage media with a computer program product according to the previous claim 14.
